(19) Europäisches Patentamt
European Patent Office
Office européen des brevets

(11) Publication number: 0 448 166 B1

# EUROPEAN PATENT SPECIFICATION

(45) Date of publication of patent specification: 04.10.95

(51) Int. Cl.⁶: C08J 3/09, C10L 1/14, //C08L33:04

(21) Application number: 91200573.3

(22) Date of filing: 15.03.91

(54) **Polymer compositions.**

(30) Priority: 21.03.90 GB 9006315

(43) Date of publication of application:
25.09.91 Bulletin 91/39

(45) Publication of the grant of the patent:
04.10.95 Bulletin 95/40

(84) Designated Contracting States:
BE DE ES FR GB IT NL SE

(56) References cited:
DE-A- 2 612 757
US-A- 3 779 969

(73) Proprietor: SHELL INTERNATIONALE RE-
SEARCH MAATSCHAPPIJ B.V.
Carel van Bylandtlaan 30
NL-2596 HR Den Haag (NL)

(72) Inventor: Reynhout, Marinus Johannes
Badhuisweg 3
NL-1031 CM Amsterdam (NL)
Inventor: In 't Veen, Bernardus Cornelis Maria
Badhuisweg 3
NL-1031 CM Amsterdam (NL)

## Description

This invention relates to polymer compositions, their preparation and their use as pour-point depressants.

Crude oils (crude mineral oils) and certain fuels (oils) derived therefrom, e.g. wax-containing fuel oils and diesel fuels, may contain considerable amounts of wax. This wax gradually separates out as such materials are cooled, and at sufficiently low temperatures these materials may solidify completely. The lowest temperature observed during a standard laboratory test (ASTM D.97) at which the waxy material still flows is called the "pour point" of the material.

In order to overcome the problems arising from cooling of such materials in storage or in transport, whether in tankers or by pipeline, has led to the development of certain polymers which when added to such materials depress the pour point of the material.

Such polymers are typically polymers obtained by polymerisation of at least one olefinically unsaturated compound, which polymers contain aliphatic hydrocarbon side chains of at least 10 carbon atoms, e.g. $C_{10-30}$ aliphatic hydrocarbon side chains. Typically these polymers have molecular weights ($M_n$) in the range 10,000 to 1,000,000.

Examples of such polymers are described in UK Patents Nos. 1,154,966, 1,161,188, 1,285,087, 1,410,819, EP-A-120 512, EP-A-236 844 and US Patent No. 4,547,202.

Whilst these polymers have proved to be very effective pour point depressants, and hence useful fluidity improvers, they are typically sold as concentrated solutions in solvents such as toluene or xylene, which solutions may themselves have relatively high pour points. For dispersion in tanks of crude oil and fuel oil, this normally presents no significant problem. Examples of commercially available fluidity improvers include those available from the Royal Dutch/Shell Group of companies under the trade mark "SHELLSWIM - 5X", a 50%w solution of an alkyl acrylate polymer in xylene (having a pour point of 27°C), and under the trade mark "SHELLSWIM - 11T", a 50%w solution of an alkyl acrylate/vinyl pyridine copolymer in toluene (having a pour point of 18°C).

However there are circumstances, e.g. where it may be desired to pass the fluidity improvers themselves along a pipeline in cold environments, e.g. in North Sea or Arctic areas, when it would be advantageous to have concentrated formulations of pour point depressants which would remain readily flowable at low ambient temperatures.

According to the present invention there is provided a polymer composition comprising a dispersion of at least one polymer obtained by polymerisation of at least one olefinically unsaturated compound, which polymer contains aliphatic hydrocarbon side chains of at least 10 carbon atoms and has a molecular weight ($M_n$) in the range 20,000 to 250,000, in a continuous liquid phase comprising a surfactant, at least one liquid polyol, and optionally water provided that the water is present in an amount not exceeding 40 parts by weight of water per 100 parts by weight of liquid polyol.

Readily available liquid polyols include ethylene glycol, propylene glycol, 1,3-butylene glycol, diethylene glycol, triethylene glycol, tetraethylene glycol and glycerol. Preferably the at least one liquid polyol is selected from ethylene glycol and glycerol and more preferably it is glycerol or a mixture of ethylene glycol and glycerol. Most preferably the at least one liquid polyol is glycerol.

Suitable polymers are described in UK Patents Nos. 1,154,966, 1,161,188, 1,285,087, EP-A-120 512, EP-A-236 844 and US Patent No. 4,547,202. These polymers typically have molecular weights ($M_n$) in the range 10,000 to 1,000,000, and contain $C_{10-30}$ aliphatic hydrocarbon side chains. The polymer has molecular weight ($M_n$) in the range 20,000 to 250,000, preferably 25,000 to 100,000, e.g. 30,000 to 80,000.

The polymer is preferably a homo- or copolymer of one or more ($C_{18-30}$ n-alkyl) acrylates or methacrylates, e.g. 1-docosyl acrylate ($C_{22}$), 1-octadecyl acrylate ($C_{18}$) and 1-eicosyl acrylate ($C_{20}$). Suitable copolymers are copolymers of one or more ($C_{18-30}$ n-alkyl) acrylates or methacrylates with a monoolefinically unsaturated compound having a nitrogen containing group, such as acrylonitrile, acrylamide, p-aminostyrene, N-vinylpyrrolidone or 4-vinylpyridine.

Most preferably the polymer is a polymer of one or more ($C_{18-26}$ n-alkyl) acrylates or a copolymer of one or more ($C_{18-26}$ n-alkyl) acrylates and 4-vinylpyridine.

Various surfactants are suitable for incorporation in compositions according to the invention. Preferably the surfactant is selected from alcohol ethoxy sulphate surfactants and lignosulphonate surfactants. Such surfactants are typically alkali metal or ammonium salts. Alcohol ethoxy sulphate surfactants typically have the formula

$$RO\text{-}(CH_2CH_2O)_n\text{-}SO_3\text{-}M$$

where M is sodium or ammonium, R is $C_{12-18}$ alkyl and n is 2 or 3.

Compositions according to the invention preferably contain 1 to 10, preferably 2 to 8, parts by weight of surfactant per 100 parts by weight of polymer and 50 to 200, preferably 80 to 125, parts by weight of liquid polyol per 100 parts by weight of polymer. These amounts include any minor amounts of solvents such as ethanol and/or water which may be present in the surfactant chosen for incorporation in the composition.

Other additives may be incorporated in minor amounts in compositions of the invention such as anti-oxidants, anti-corrosion agents or metal deactivators.

It has further been found that the presence of water in compositions of the invention may have beneficial effect in terms of viscosity reduction. Preferably compositions of the invention contain up to 40 parts, more preferably up to 35 parts, by weight of water per 100 parts by weight of liquid polyol in the composition.

The invention further provides a process for the preparation of polymer compositions of the invention, which process comprises emulsifying a mixture of the polymer, the surfactant and the polyol at a temperature above the melting point of the polymer, optionally adding up to 40 parts by weight of water per 100 parts by weight of polyol, and cooling the resulting emulsion to a temperature below the melting temperature of the polymer.

The upper temperature limit for the process will be determined by the lowest decomposition temperature of any of the various components of the mixture. Using acrylate polymers, alcohol ethoxy sulphate surfactants and/or lignosulphonate surfactants, and glycerol or ethylene glycol/glycerol as liquid polyols, temperatures for emulsifying the mixtures in the range 80ºC to 140ºC have been found to be very effective.

Further in accordance with the invention there is provided the use of a composition of the invention in depressing the pour point of a crude mineral oil or a wax-containing fuel oil or diesel oil.

The polymer compositions of the invention have particularly useful application according to the invention in inhibition and/or reduction of wax deposition in crude oil pipelines. The fact that the compositions are fluid at lower temperatures than simple solutions of the relevant polymer at corresponding concentrations in solvents such as toluene or xylene confers significant improvements in handleability in lower temperature environments.

The invention will be further understood from the following illustrative Examples, in which:-

Polymer A is an alkyl acrylate polymer, mp 51ºC, of molecular weight ($M_n$) in the range 49,000 to 76,000 measured by gel permeation chromatography (GPC) (polyacrylate scale) prepared from a blend of linear alkyl acrylates comprising 31.2%w 1-docosyl acrylate, 9.25%w 1-octadecyl acrylate and 55.5%w 1-eicosyl acrylate, the balance, 4.05%w, being higher and lower alkylacrylates.

Polymer B is an alkylacrylate/vinyl pyridine copolymer, mp 47ºC, of molecular weight (Mn) in the range 25,000 to 60,000 (by GPC) prepared by copolymerisation of 86.5%w of a blend of linear alkyl acrylates (27%w 1-docosyl acrylate, 8%w 1-eicosyl acrylate, 48%w 1-octadecyl acrylate and 3.5%w higher and lower alkyl acrylates) and 13.5%w 4-vinyl pyridine.

"DOBANOL 25-3A/60" (trade mark) ethoxy sulphate is a 60%w solution in aqueous ethanol (2:1 w/w) of ammonium ($C_{12-15}$ alcohol) ethoxy sulphates containing 3 mol ethylene oxide/mol (density at 20ºC 1.04 kg/l).

Examples 1 to 5

Glycerol (12g) and "DOBANOL 25 - 3A/60" ethoxysulphate (0.53ml, 0.55g) were stirred to give a homogenous solution at ambient temperature (20ºC) in a 60ml bottle. Polymer A (14.7g) at 80ºC was added and the bottle was transferred to a thermostat oil bath at 126ºC. The two-phase mixture in the bottle was emulsified using an "ULTRA TURRAX T25" (trade mark) laboratory emulsifier (1.8cm dispersing tool, at 10,000 r.p.m.) for 5 minutes. The resulting emulsion of Polymer A (discontinuous phase) in glycerol (continuous phase) was cooled by removing the bottle from the oil bath and allowing it to cool in air to ambient temperature (20ºC), to yield the desired composition as a readily flowable suspension, which was found to be stable at ambient temperature (20ºC) for at least one month, and stable at 50ºC for at least one day. The suspension remained liquid at least down to 0ºC.

Additional suspensions (Examples 2 to 5) were prepared in similar manner to the above suspension (Example 1). Details of all five suspensions and their preparations are given in Table I following.

TABLE I

| Example | Polymer | Parts by weight glycerol/100 parts Polymer | Parts by weight ethoxy sulphate/100 parts Polymer | Oil bath temperature °C |
|---|---|---|---|---|
| 1 | A | 82 | 3.8 | 126 |
| 2 | A | 122 | 4.6 | 125 |
| 3 | A | 200 | 6.25 | 130 |
| 4 | A | 67 | 3.4 | 130 |
| 5 | B | 100 | 4.2 | 122 |

In each case the suspensions were stable at ambient temperature (20ºC) for at least one month and stable at 50ºC for at least one day. The suspensions were all liquid at least down to 0ºC, those of Examples 3 and 4 being liquid down to -20ºC. Addition of the above suspensions, at concentrations in the range 400 to 2500 parts per million, to a Far East crude oil resulted in reduced pour point as determined according to ASTM D.97, equivalent to pour point reduction achieved using the commercially available fluidity improvers "SHELLSWIM-5X" and "SHELLSWIM-11T".

Examples 6 to 9

Glycerol (50g) and "DOBANOL 25-3A/60" ethoxysulphate (2ml, 2.1g) were stirred together at ambient temperature (20ºC) in a 150ml beaker to give a homogenous solution. Polymer B (50g) at 80ºC was added and the beaker was transferred to a thermostat oil bath at 125ºC. The two-phase mixture in the beaker was emulsified using an "ULTRA TURRAX T25" (trade mark) laboratory emulsifier (1.8cm dispersing tool, at 24,000 r.p.m.), for 3 minutes, until the temperature of the mixture reached 140ºC. The resulting emulsion of Polymer B in glycerol was cooled by removing the beaker from the oil bath and allowing it to cool in air to ambient temperature (20º) to yield the desired composition as a readily flowable suspension, which was found to be stable at 50ºC for at least one day. The suspension remained liquid at least down to 0ºC.

Additional suspensions (Examples 7 to 9) were prepared in similar manner to the above suspension (Example 6). Details of Examples 6 to 9 are given in Table II following. (In each case Polymer B was used)

TABLE II

| Example | Parts by weight glycerol/100 parts Polymer | Parts by weight ethoxy sulphate/100 parts Polymer | Oil bath temp. °C | Peak temp. of mixture (°C) | Mixing time (min) |
|---|---|---|---|---|---|
| 6 | 100 | 4.2 | 125 | 140 | 3 |
| 7 | 100 | 6.2 | 125 | 140 | 3 |
| 8 | 100 | 2.1 | 125 | 140 | 3 |
| 9 | 82 | 4.2 | 100 | 123 | 1 50/60 |

In each case the suspensions were stable at ambient temperature (20ºC) for at least one month and stable at 50ºC for at least one day. The suspensions were all liquid at least down to 0ºC. Addition of each suspension, at concentration greater than 2000 parts per million, to a Far East crude oil resulted in reduced pour point as determined according to ASTM D.97, equivalent to pour point reduction achieved using "SHELLSWIM-11T".

Examples 10 and 11

Using a pilot scale colloid mill, Model CH-4310 ex Fryma Maschinen A.G., W. Germany, 1 litre quantities of suspensions having the composition of Example 9 were prepared. Emulsions from the colloid mill were collected in 1 litre glass bottles which were cooled to ambient temperature (20ºC) either by streaming tapwater at 15ºC over them (temperature reduction from 120ºC to 60ºC over 15 minutes) or by placing them in an ice/water bath (temperature reduction from 120ºC to 45ºC over 15 minutes).

The resulting emulsions which were stable at ambient temperature (20ºC) for at least one month and stable at 50ºC for at least one day, and were liquid at least down to 0ºC, were tested for pour point

4

depression according to ASTM D.97, using a Far East crude oil having a pour point of 30°C. Results are given in Table III following

TABLE III

| Example | Emulsification temperature (°C) | Rate of addition to Far East Crude Oil (mg/kg) | Pour point of treated oil (°C) |
|---|---|---|---|
| 10 | 115 | 3170 | 12 |
| 11 | 120 | 4180 | 9 |

Example 12

Following a procedure similar to that of Example 5, but using an oil bath at a temperature of 80°C, there was prepared a suspension containing 50 parts by weight glycerol, 50 parts by weight ethylene glycol and 4.2 parts by weight "DOBANOL 25-3A/60" ethoxysulphate per 100 parts by weight Polymer B.

The resulting suspension was not fully stable, in that within one day at ambient temperature (20°C) the stored suspension became solid. However, on gentle shaking the suspension again became liquid. Even after storage for 1 month at ambient temperature (20°C), the stored suspension could be restored to the liquid state by gentle shaking.

Example 13 and 14

Following the procedure of Example 12 there were prepared two additional glycol-containing suspensions of Polymer B.

Example 13 contained 100 parts by weight ethylene glycol and 4 parts by weight lignosulphonate surfactant ("BORRESPERSE/NH" (trade mark) surfactant ex Borregaard, Sarpsborg, Norway), per 100 parts by weight Polymer B.

Example 14 contained 50 parts by weight ethylene glycol, 50 parts by weight glycerol, 3 parts by weight "BORRESPERSE/NH" lignosulphonate surfactant and 3 parts by weight "DOBANOL 25-3A/60" ethoxysulphonate, per 100 parts by weight Polymer B.

Neither of these suspensions was fully stable, in that within one day at ambient temperature (20°C) the stored suspensions became solid. However, on gentle shaking the suspensions again became liquid. Even after storage for 1 month at ambient temperature (20°C), the stored suspensions could be restored to the liquid state by gentle shaking.

Examples 15 to 19

Following a similar procedure to that of Examples 6 to 9 above, there was prepared an emulsion containing 66.6g Polymer A, 33.3g glycerol and 2.7 g "DOBANOL 25-3A/60" ethoxysulphate (4.0 parts by weight ethoxysulphate/100 parts polymer). Oil bath temperature was 105°C, and the peak temperature of the mixture was 121°C.

The resulting suspensions were diluted with quantities of ethylene glycol or water to give stable suspensions, which were tested by addition to a Far East crude oil and assessment of the pour point according to ASTM D.97. The pour point of the undoped crude oil was 30°C. Details of the suspensions, together with those of a corresponding suspension containing 100 parts by weight glycerol per 100 parts polymer, but no ethylene glycol or water, are given in Table III following:-

## TABLE III

| Example | Parts by weight glycerol/100 parts Polymer | Parts by weight ethylene glycol/100 parts glycerol | Parts by weight water/100 parts glycerol | Viscosity at 20°C (Pa.s) | Rate of addition of suspension to Far East crude oil (mg Polymer/ kg oil) | Pour Point of treated oil (°C) |
|---|---|---|---|---|---|---|
| 15 | 100 | - | - | 13.7 | 2655 | 15 |
| 16 | 50 | 33 | - | 12.5 | 1800 | 12 |
| 17 | 50 | 75 | - | 2.4 | 1725 | 15 |
| 18 | 50 | 100 | - | 1.4 | 1785 | 12 |
| 19 | 50 | - | 33 | 1.9 | 2060 | 12 |
| Comparative A | 50 | - | 75 | | 1650 | 30 |

Viscosity was measured at 20°C with a cone and plate system in a Carri-Med "CSL 500" Rheometer.

In each case the suspensions of Examples 15 to 19 were similarly stable as those of Examples 6 to 9.

It will be noted in Table III that whereas inclusion of 33 parts by weight water/100 parts glycerol in Example 19 led to a low viscosity suspension which was effective as a pour-point depresant, inclusion of 75 parts by weight water/100 parts glycerol in Comparative Example A led to a composition which was not effective as a pour-point depressant.

**Claims**

**Claims for the following Contracting States : BE, DE, FR, GB, IT, NL, SE**

1. A polymer composition comprising a dispersion of at least one polymer obtained by polymerisation of at least one olefinically unsaturated compound, which polymer contains aliphatic hydrocarbon side chains of at least 10 carbon atoms and has a molecular weight ($M_n$) in the range 20,000 to 250,000, in a continuous liquid phase comprising a surfactant, at least one liquid polyol, and optionally water provided that the water is present in an amount not exceeding 40 parts by weight of water per 100 parts by weight of liquid polyol.

2. A composition according to Claim 1 wherein the at least one liquid polyol is selected from ethylene glycol and glycerol.

3. A composition according to Claim 1 or 2 wherein the at least one liquid polyol is glycerol.

4. A composition according to any one of Claims 1 to 3 which contains 1 to 10 parts by weight of surfactant per 100 parts by weight of polymer and 50 to 200 parts by weight of liquid polyol per 100 parts by weight of polymer.

5. A composition according to any one of Claims 1 to 4 wherein the polymer is a polymer of one or more ($C_{18-26}$ n-alkyl) acrylates or a copolymer of one or more ($C_{18-26}$ n-alkyl) acrylates and 4-vinyl pyridine.

6. A composition according to any one of Claims 1 to 5 wherein the surfactant is an alcohol ethoxy sulphate surfactant or a lignosulphonate surfactant.

7. A composition according to any one of Claims 1 to 6 which additionally contains up to 40 parts by weight of water per 100 parts by weight of liquid polyol.

8. A process for the preparation of a composition according to any one of Claims 1 to 7 which comprises emulsifying a mixture of the polymer, the surfactant and the polyol at a temperature above the melting point of the polymer, optionally adding up to 40 parts by weight of water per 100 parts by weight of polyol, and cooling the resulting emulsion to a temperature below the melting temperature of the polymer.

9. Use of a composition according to any one of Claims 1 to 7 in depressing the pour point of a crude mineral oil or a wax-containing fuel oil or diesel oil.

**Claims for the following Contracting State : ES**

1. A process for the preparation of a polymer composition comprising a dispersion of at least one polymer obtained by polymerisation of at least one olefinically unsaturated compound, which polymer contains aliphatic hydrocarbon side chains of at least 10 carbon atoms and has a molecular weight ($M_n$) in the range 20,000 to 250,000, in a continuous liquid phase comprising a surfactant, at least one liquid polyol, and optionally water provided that the water is present in an amount not exceeding 40 parts by weight of water per 100 parts by weight of liquid polyol, which process comprises emulsifying a mixture of the polymer, the surfactant and the polyol at a temperature above the melting point of the polymer, optionally adding up to 40 parts by weight of water per 100 parts by weight of polyol, and cooling the resulting emulsion to a temperature below the melting temperature of the polymer.

2. A process according to Claim 1 wherein the at least one liquid polyol is selected from ethylene glycol and glycerol.

3. A process according to Claim 1 or 2 wherein the at least one liquid polyol is glycerol.

4. A process according to any one of Claims 1 to 3 which contains 1 to 10 parts by weight of surfactant per 100 parts by weight of polymer and 50 to 200 parts by weight of liquid polyol per 100 parts by weight of polymer.

5. A process according to any one of Claims 1 to 4 wherein the polymer is a polymer of one or more ($C_{18-26}$ n-alkyl) acrylates or a copolymer of one or more ($C_{18-26}$ n-alkyl) acrylates and 4-vinyl pyridine.

6. A process according to any one of Claims 1 to 5 wherein the surfactant is an alcohol ethoxy sulphate surfactant or a lignosulphonate surfactant.

7. A process according to any one of Claims 1 to 6 which additionally contains up to 40 parts by weight of water per 100 parts by weight of liquid polyol.

8. Use of a polymer composition as prepared in accordance with any one of Claims 1 to 7 in depressing the pour point of a crude mineral oil or a wax-containing fuel oil or diesel oil.

**Patentansprüche**

**Patentansprüche für folgende Vertragsstaaten : BE, DE, FR, GB, IT, NL, SE**

1. Polymerzusammensetzung, enthaltend eine Dispersion mindestens eines durch Polymerisation mindestens einer olefinisch ungesättigten Verbindung erhaltenen Polymerisats, das aliphatische Kohlenwasserstoffseitenketten mit mindestens 10 Kohlenstoffatomen enthält und ein Molekulargewicht ($M_n$) im Bereich von 20 000 bis 25 0000 aufweist, in einer kontinuierlichen Flüssigphase, die ein Tensid, mindestens ein flüssiges Polyol und gegebenenfalls Wasser enthält, mit der Maßgabe, daß das Wasser in einer Menge von nicht über 40 Gewichtsteilen Wasser je 100 Gewichtsteile flüssiges Polyol vorliegt.

2. Zusammensetzung nach Anspruch 1, wobei das mindestens eine flüssige Polyol aus der Reihe Ethylenglykol und Glyzerin gewählt wird.

3. Zusammensetzung nach Anspruch 1 oder 2, wobei es sich bei dem mindestens einen flüssigen Polyol um Glyzerin handelt.

4. Zusammensetzung nach einem der Ansprüche 1 bis 3, die 1 bis 10 Gewichtsteile Tensid je 100 Gewichtsteile Polymerisat und 50 bis 200 Gewichtsteile flüssiges Polyol je 100 Gewichtsteile Polymerisat enthält.

5. Zusammensetzung nach einem der Ansprüche 1 bis 4, wobei es sich bei dem Polymerisat um ein Polymerisat aus einem oder mehreren ($C_{18-26}$-n-Alkyl)-acrylaten oder ein Copolymerisat aus einem oder mehreren ($C_{18-26}$-n-Alkyl)-acrylaten und 4-Vinylpyridin handelt.

6. Zusammensetzung nach einem der Ansprüche 1 bis 5, wobei es sich bei dem Tensid um ein Alkoholethoxysulfat-tensid oder ein Lignosulfonat-Tensid handelt.

7. Zusammensetzung nach einem der Ansprüche 1 bis 6, die zusätzlich bis zu 40 Gewichtsteile Wasser je 100 Gewichtsteile flüssiges Polyol enthält.

8. Verfahren zur Herstellung einer Zusammensetzung nach einem der Ansprüche 1 bis 7, bei dem ein Gemisch des Polymerisats, des Tensids und des Polyols bei einer Temperatur über dem Schmelzpunkt des Polymerisats emulgiert wird, gegebenenfalls bis zu 40 Gewichtsteile Wasser je 100 Gewichtsteile Polyol zugegeben werden, und die entstandene Emulsion auf eine Temperatur unter der Schmelztemperatur des Polymerisats abgekühlt wird.

9. Verwendung einer Zusammensetzung nach einem der Ansprüche 1 bis 7 bei der Erniedrigung des Stockpunkts eines Rohnaphthas oder eines paraffinhaltigen Heizöls oder Dieselöls.

**Patentansprüche für folgenden Vertragsstaat : ES**

1. Verfahren zur Herstellung einer Polymerzusammensetzung, enthaltend eine Dispersion mindestens eines durch Polymerisation mindestens einer olefinisch ungesättigten Verbindung erhaltenen Polymerisats, das aliphatische Kohlenwasserstoffseitenketten mit mindestens 10 Kohlenstoffatomen enthält und ein Molekulargewicht ($M_n$) im Bereich von 20 000 bis 25 0000 aufweist, in einer kontinuierlichen Flüssigphase, die ein Tensid, mindestens ein flüssiges Polyol und gegebenenfalls Wasser enthält, mit der Maßgabe, daß das Wasser in einer Menge von nicht über 40 Gewichtsteilen Wasser je 100 Gewichtsteile flüssiges Polyol vorliegt, wobei bei dem Verfahren ein Gemisch des Polymerisats, des Tensids und des Polyols bei einer Temperatur über dem Schmelzpunkt des Polymerisats emulgiert wird, gegebenenfalls bis zu 40 Gewichtsteile Wasser je 100 Gewichtsteile Polyol zugegeben werden, und die entstandene Emulsion auf eine Temperatur unter der Schmelztemperatur des Polymerisats abgekühlt wird.

2. Verfahren nach Anspruch 1, wobei das mindestens eine flüssige Polyol aus der Reihe Ethylenglykol und Glyzerin gewählt wird.

3. Verfahren nach Anspruch 1 oder 2, wobei es sich bei dem mindestens einen flüssigen Polyol um Glyzerin handelt.

4. Verfahren nach einem der Ansprüche 1 bis 3, das 1 bis 10 Gewichtsteile Tensid je 100 Gewichtsteile Polymerisat und 50 bis 200 Gewichtsteile flüssiges Polyol je 100 Gewichtsteile Polymerisat enthält.

5. Verfahren nach einem der Ansprüche 1 bis 4, wobei es sich bei dem Polymerisat um ein Polymerisat aus einem oder mehreren ($C_{18-26}$-n-Alkyl) Acrylaten oder einem Copolymerisat aus einem oder mehreren ($C_{18-26}$-n-Alkyl)-acrylaten und 4-Vinylpyridin handelt.

6. Verfahren nach einem der Ansprüche 1 bis 5, wobei es sich bei dem Tensid um ein Alkoholethoxysulfat-Tensid oder ein Lignosulfonat-Tensid handelt.

7. Verfahren nach einem der Ansprüche 1 bis 6, das zusätzlich bis zu 40 Gewichtsteile Wasser je 100 Gewichtsteile flüssiges Polyol enthält.

8. Verwendung einer gemäß einem der Ansprüche 1 bis 7 hergestellten Polymerzusammensetzung bei der Erniedrigung des Stockpunkts eines Rohnaphthas oder eines paraffinhaltigen Heizöls oder Diesel-öls.

**Revendications**
**Revendications pour les Etats contractants suivants : BE, DE, FR, GB, IT, NL, SE**

1. Composition de polymère comprenant une dispersion d'au moins un polymère obtenu par la polymérisation d'au moins un composé oléfiniquement insaturé, lequel polymère contient des chaînes latérales hydrocarbonées aliphatiques d'au moins 10 atomes de carbone et possède un poids moléculaire ($M_n$) qui fluctue de 20.000 à 250.000, dans une phase liquide continue comprenant un surfactif, au moins un polyol liquide et, eventuellement, de l'eau, pour autant que l'eau soit présente en une quantité n'excédant pas 40 parties en poids d'eau par 100 parties en poids de polyol liquide.

2. Composition suivant la revendication 1, caractérisée en ce que l'au moins un polyol liquide est choisi parmi l'éthylèneglycol et le glycérol.

3. Composition suivant la revendication 1 ou 2, caractérisée en ce que l'au moins un polyol liquide est le glycérol.

4. Composition suivant l'une quelconque des revendications 1 à 3, caractérisée en ce qu'elle contient 1 à 10 parties en poids de surfactif par 100 parties en poids de polymère et 50 à 200 parties en poids de polyol liquide par 100 parties en poids de polymère.

**5.** Composition suivant l'une quelconque des revendications 1 à 4, caractérisée en ce que le polymère est un polymère d'un ou plusieurs acrylates de n-alkyle en $C_{18}$ à $C_{26}$, ou un copolymère d'un ou plusieurs acrylates de n-alkyle en $C_{18}$ à $C_{26}$ et de la 4-vinylpyridine.

**6.** Composition suivant l'une quelconque des revendications 1 à 5, caractérisée en ce que le surfactif est un alcooléthoxysulfate ou un lignosulfonate.

**7.** Composition suivant l'une quelconque des revendications 1 à 6, caractérisée en ce qu'elle contient, en outre, jusqu'à 40 parties en poids d'eau par 100 parties en poids du polyol liquide.

**8.** Procédé de préparation d'une composition suivant l'une quelconque des revendications 1 à 7, caractérisé en ce que l'on émulsionne un mélange du polymère, du surfactif et du polyol à une température supérieure au point de fusion du polymère, on ajoute éventuellement jusqu'à 40 parties en poids d'eau par 100 parties en poids de polyol et on refroidit l'émulsion ainsi obtenue jusqu'à une température inférieure au point de fusion du polymère.

**9.** Utilisation d'une composition suivant l'une quelconque des revendications 1 à 7 à titre d'agent d'abaissement du point d'écoulement d'une huile minérale brute ou d'un pétrole brut, ou d'un fioul Diesel ou d'un fioul de chauffage.

**Revendications pour l'Etat contractant suivant : ES**

**1.** Procédé de préparation d'une composition de polymère comprenant une dispersion d'au moins un polymère obtenu par la polymérisation d'au moins un composé oléfiniquement insaturé, lequel polymère contient des chaînes latérales hydrocarbonées aliphatiques d'au moins 10 atomes de carbone et possède un poids moléculaire ($M_n$) qui fluctue de 20.000 à 250.000, dans une phase liquide continue comprenant un surfactif, au moins un polyol liquide et, éventuellement, de l'eau, pour autant que l'eau soit présente en une quantité n'excédant pas 40 parties en poids d'eau par 100 parties en poids de polyol liquide, caractérisé en ce qu'on émulsionne un mélange du polymère, du surfactif et du polyol à une température supérieure au point de fusion du polymère, on ajoute éventuellement jusqu'à 40 parties en poids d'eau par 100 parties en poids de polyol et on refroidit l'émulsion ainsi obtenue jusqu'à une température inférieure au point de fusion du polymère.

**2.** Procédé suivant la revendication 1, caractérisé en ce que l'au moins un polyol liquide est choisi parmi l'éthylèneglycol et le glycérol.

**3.** Procédé suivant la revendication 1 ou 2, caractérisé en ce que l'au moins un polyol liquide est le glycérol.

**4.** Procédé suivant l'une quelconque des revendications 1 à 3, caractérisé en ce qu'il contient 1 à 10 parties en poids de surfactif par 100 parties en poids de polymère et 50 à 200 parties en poids de polyol liquide par 100 parties en poids de polymère.

**5.** Procédé suivant l'une quelconque des revendications 1 à 4, caractérisé en ce que le polymère est un polymère d'un ou plusieurs acrylates de n-alkyle en $C_{18}$ à $C_{26}$, ou un copolymère d'un ou plusieurs acrylates de n-alkyle en $C_{18}$ à $C_{26}$ et de la 4-vinylpyridine.

**6.** Procédé suivant l'une quelconque des revendications 1 à 5, caractérisé en ce que le surfactif est un alcooléthoxysulfate ou un lignosulfonate.

**7.** Procédé suivant l'une quelconque des revendications 1 à 6, caractérisé en ce qu'il contient, en outre, jusqu'à 40 parties en poids d'eau par 100 parties en poids du polyol liquide.

**8.** Utilisation d'une composition de polymère telle que préparée suivant l'une quelconque des revendications 1 à 7 à titre d'agent d'abaissement du point d'écoulement d'une huile minérale brute ou d'un pétrole brut, ou d'un fioul de chauffage ou d'un fioul Diesel.